# EUROPEAN PATENT APPLICATION

(11) **EP 2 385 725 A1**
(43) Date of publication of application: **09.11.2011**
(21) Application number: 10290233.5
(22) Date of filing: 03.05.2010
(51) Int. Cl.: H04W 36/32

(54) **Method of performing a handover procedure in a wireless telecommunication network**

(71) Applicant: Alcatel Lucent, 75008 Paris (FR)
(72) Inventor: Bakker, Hajo, 71735 Eberdingen (DE); Aziz, Danish, 70435 Stuttgart (DE); Ewe, Lutz, 70469 Stuttgart (DE)
(74) Representative: Richardt Patentanwälte

(57) **Abstract**

The invention relates to a method of performing a handover in a wireless telecommunication network. During the handover procedure mobility information is transmitted from a first (108) to a second (110) base station. The second base station optimizes handover parameters based on the mobility information.

## Description

### Field of the invention

The invention relates to the field of wireless telecommunication in a wireless telecommunication network, more specifically to a handover procedure of a wireless terminal in a wireless telecommunication network.

### Background and related art

During a handover procedure various parameters such as the time to trigger for example may be modified for optimizing the handover procedure. Mobility state parameters are used by a base station for determining the speed of a wireless terminal. The time to trigger (TTT) is an important handover parameter. If the received signal of a neighbor cell is stronger than the signal of the serving cell during the time to trigger a handover event is triggered in the wireless terminal and the wireless terminal sends a handover request to the base station of the serving cell to start the handover procedure.

### Summary of the invention

It is the object of the present invention to provide an improved method for performing a handover procedure of a wireless terminal from a first base station to a second base station in a wireless telecommunication network, an improved base station apparatus for receiving a handover request, an improved base station apparatus for transmitting a handover request, an improved wireless telecommunication system, an improved computer readable storage medium for receiving a handover request and an improved computer readable storage medium for transmitting a handover request. This object is achieved by the method, the base station apparatuses, the wireless telecommunication system, and the computer readable storage media according to the independent claims. Embodiments of the invention are given in the dependent claims.

The invention provides a method for performing a handover procedure of a wireless terminal from a first base station to a second base station in a wireless telecommunication network. The wireless terminal is moved with a speed. The speed is categorized in a first, a second, or a third speed category depending on mobility state parameters of a plurality of base stations. The plurality of base stations comprises the first base station. In long term evolution (LTE) networks the speed category is referred to as a mobility state.

The mobility state parameters comprise a first cell changes threshold and a second cell changes threshold and an evaluation time. The evaluation time is the time period, for which the wireless terminal determines a number of handovers performed by the wireless terminal. A handover is always performed from one cell to another such that the number of handovers corresponds to the number of cell changes. Thus, by knowing the number of handovers during the evaluation time the wireless terminal may be categorized into the different speed categories. It is to be noted that also a wireless terminal with a low speed in reality may be categorized into a speed category for high speeds, because in regions with small cell sizes cells may be changed often for a wireless terminal moving in the overlapping region of at least two cells.

The speed of the wireless terminal is categorized in the first category, if the number of performed handovers is below the first cell changes threshold. Thus, the first category corresponds to relatively slow wireless terminals. The speed of the wireless terminal is categorized in the second category, if the number of performed handovers is above the first cell changes threshold and below the second cell changes threshold. Thus, the second category comprises wireless terminals with medium speed. The speed of the wireless terminal is categorized in the third category, if the number of performed handovers is above the second cell changes threshold. These wireless terminals are consequently fast moving wireless terminals.

The method further comprises transmitting a handover request message from the first base station to the second base station. The handover request message comprises mobility information of the wireless terminal.

According to embodiments of the invention the mobility information of the wireless terminal comprises the mobility state parameters of each base station of the plurality of base stations and connection times. Preferably, the plurality of base stations comprises the first base station and 15 further base stations. The plurality of base stations consists of those base stations, to which the wireless terminal has been connected previously. The connection times are the times the wireless terminal was connected to each base station of the plurality of base stations. Thus, to each base station of the plurality of base stations corresponds one connection time and one set of mobility state parameters. The second base station determines the speed category of the wireless terminal based on the mobility state parameters of the plurality of base stations and the connection times.

By knowing the mobility state parameters of the plurality of base stations and the connection times the second base station is enabled to determine the speed category of the wireless terminal in the same way as the wireless terminal determines its speed category. The mobility state parameters and the connection times are necessary for the determination because each base station may apply different mobility state parameters. For example, the evaluation time can differ from 30 to 240 or even more seconds. An evaluation of 30 seconds for example means that the number of handovers performed by the wireless terminal in the last 30 seconds are counted. Also the cell changes thresholds can differ between different base stations.

The time to trigger for a handover procedure is an important parameter during the handover procedure. The optimal time to trigger depends highly on the speed of the wireless terminal. For example for a fast moving wireless terminal a shorter time to trigger may be advantageous, while for a slow moving wireless terminal a longer time to trigger may be advantageous.

Preferably, the time to trigger is adjusted by transmitting a value for the time to trigger for the first speed category from the base station to the wireless terminal and scale factors for multiplying this time to trigger for the second and the third speed category.

According to embodiments of the invention the mobility information of the wireless terminal comprises the speed category of the wireless terminal in each base station of the plurality of base stations.

Embodiments of the invention are advantageous for optimizing the time to trigger parameter for handover procedures from a first base station to a second base station. For example, the second base station learns for wireless terminals having been categorized in the last three cells as moving with a speed in the third speed category a shorter time to trigger is advantageous. The second cell may also learn that a wireless terminal having been categorized as moving with a speed of the third speed category in the last five cells shall not be handed over from the first cell to the second cell. The second cell may for example learn this because handovers from the first cell to the second cell always fail for such a wireless terminal. The numbers 3 and 5 in these examples are only exemplary. The second base station analyzes the mobility information of the wireless terminal, which comprises information about the 16 last visited cells and determines, if the time to trigger for a certain kind of wireless terminals with a certain profile in the mobility information should be optimized. This is advantageous, because the second cell learns which handovers from the first cell do not make sense and for which handovers the time to trigger has to be adjusted. The profile in the mobility information is a number of last visited cells. The profile may for example be the last 3 cells or the last 16 cells.

According to embodiments of the invention the method comprises transmitting a handover failure message from the second base station to the first base station if the handover procedure fails. Then, handover parameters for handovers of wireless terminals with a speed being categorized in one of the three speed categories from the first base station to the second base station are adjusted, if the number of handover failure messages for wireless terminals with a speed being categorized in the one speed category exceeds a handover failure threshold. Thus, the first base station learns from the handover failure messages from the second base station and the mobility information of the wireless terminal that handover parameters, e.g. the time to trigger, have to be adjusted.

According to embodiments of the invention the handover parameters comprise a first time to trigger. The first time to trigger is the time the signal power of the second base station received by the wireless terminal has to be higher than the signal power of the first base station received by the wireless terminal for triggering a handover procedure. The first time to trigger may be changed by the second base station into a second time to trigger for wireless terminals with a certain profile, when those wireless terminals are more often subject of handover or radio link failures than a predefined threshold.

According to embodiments of the invention the handover parameters comprise a first scale factor and a second scale factor. The time to trigger of a wireless terminal with a speed being categorized in the first speed category is the first time to trigger. The time to trigger of a wireless terminal with a speed being categorized in the second speed category is a second time to trigger. The second time to trigger is calculated by multiplying the first time to trigger with the first scale factor. The time to trigger of a wireless terminal with a speed being categorized in the third speed category is a third time to trigger. The third time to trigger is calculated by multiplying the first time to trigger with the second scale factor.

According to embodiments of the invention the method comprises analyzing the mobility information of the wireless terminal on the first base station. Then, the first base station determines, if the probability for a handover failure during a handover of the wireless terminal from the first base station to a third base station is above a probability threshold based on the analyses of the mobility information and past handover procedures of other wireless terminals from the first base station to the third base station. If this is the case, a handover from the first base station to the second base station is performed. This is advantageous because the first base station may learn from previously performed handover procedures from the first base station to the third base station that a certain kind of wireless terminals with a certain speed category should not be handed over to the third base station because the probability of a handover failure is too high. The first base station knows to avoid a handover to the third base station and hands over the wireless terminal to the second base station instead.

According to embodiments of the invention the method comprises transmitting a handover request from the first base station to a third base station. The handover request comprises the mobility information of the wireless terminal. The mobility information of the wireless terminal is analyzed in the third base station. Then, a handover rejection is transmitted from the third base station to the first base station. The handover rejection is based on the analyses of the mobility information and past handover procedures of other wireless terminals from the first base station to the third base station. The determination to transmit the handover rejection is advantageous for example when wireless terminals being categorized in one of the three speed categories are often subject of radio link failures after a handover from the first base station to the third base station. A handover rejection may also be advantageous when wireless terminals of one of the three speed categories are handed over to another base station after a very short time period after the handover from the first base station to the third base station. Thus, radio link failures and unnecessary handover procedures are avoided.

When the first base station has received a number of handover failure messages exceeding a handover failure threshold, the first base station avoids handovers for future wireless terminals with similar or same mobility information and hands these wireless terminals over to a second base station.

According to embodiments of the invention the handover parameters are adjusted based also on the categorization of past speeds of the wireless terminal. Thus, not only the speed of the wireless terminal in the first cell is taken into account for the determinations but also the speed category of the wireless terminal in other base stations of the plurality of base stations.

According to embodiments of the invention the second base station determines the speed category of the wireless terminal by determining the number of performed handovers during the evaluation time.

In another aspect the invention relates to a base station apparatus. The base station apparatus comprises means for receiving a handover request message from another base station for a handover procedure of a wireless terminal. The handover request message comprises mobility information of the wireless terminal. The base station further comprises means for determining a speed category of the wireless terminal based on the mobility state parameters and the connection times. Furthermore, the base station comprises means for receiving a handover failure message from the other base station, and means for adjusting handover parameters for the handover procedure of the wireless terminal depending on the speed category of the wireless terminal, if the number of received handover failure messages from the other base station exceeds a handover failure threshold.

In another aspect the invention relates to a base station apparatus with means for transmitting a handover request message to another base station for a handover procedure of a wireless terminal. The handover request message comprises mobility information of the wireless terminal. The base station further comprises means for transmitting a handover failure message to the other base station.

In another aspect the invention relates to a wireless telecommunication system with at least two base stations according to embodiments of the invention.

In another aspect the invention relates to a computer readable storage medium containing instructions that when executed by a base station apparatus according to embodiments of the invention cause the base station apparatus to perform a method of communicating in a wireless telecommunication network according to embodiments of the invention. The method comprises receiving a handover request message from another base station for a handover procedure of a wireless terminal. The handover request message comprises mobility information of the wireless terminal. The method further comprises determining a speed category of the wireless terminal based on the mobility state parameters and the connection times and receiving a handover failure message from the other base station.

In yet another aspect the invention relates to a computer readable storage medium containing instructions that when executed by a base station apparatus according to embodiments of the invention cause the base station apparatus to perform a method for communicating in a wireless telecommunication network according to embodiments of the invention. The method comprises transmitting a handover request message to another base station for a handover procedure of a wireless terminal. The handover request message comprises mobility information of the wireless terminal. The method further comprises transmitting a handover failure message to the other base station.

### Brief description of the drawings

In the following preferred embodiments of the invention will be described, by way of example only and with reference to the drawings in which:
- Figure 1: is a schematic view of two cells of a wireless telecommunication network with two base stations;
- Figure 2: is a schematic view of a wireless terminal having moved through a plurality of cells and performing a handover from a first to a second base station; and
- Figure 3: is a block diagram of a wireless telecommunication system with two base stations.

### Detailed description

Like numbered elements in these Figs. are either identical elements or perform the same function. Elements which have been discussed previously will not necessarily be discussed in later Figs. if the function is identical.

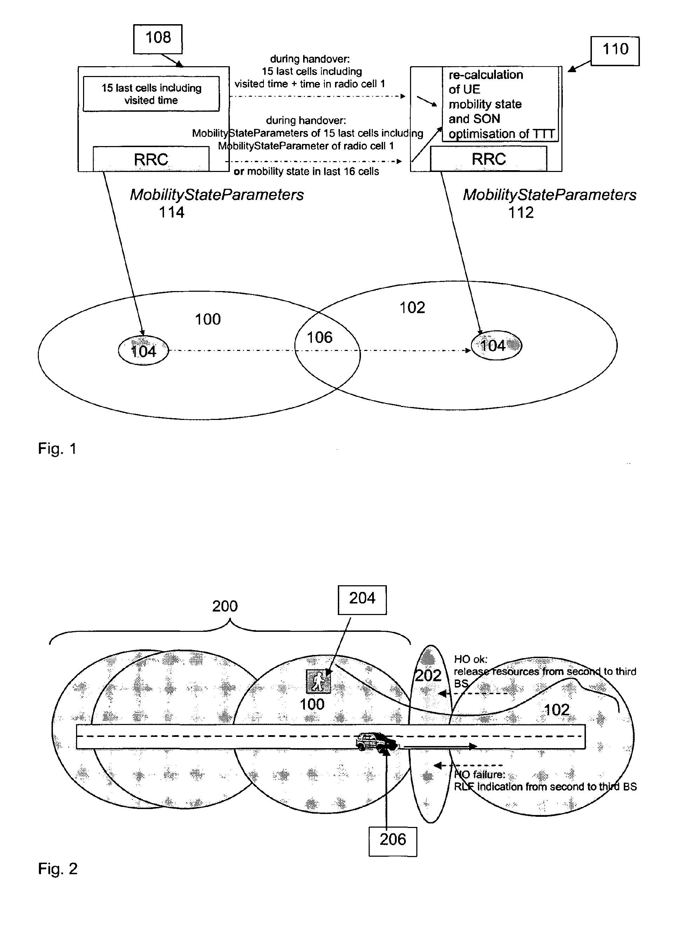

Fig. 1 is a schematic view of a first cell 100 and a second cell 102 in a wireless telecommunication network. A wireless terminal 104 is moved from the first cell 100 into the second cell 102. In the overlapping region 106 of the first cell 100 and the second cell 102 a handover of the wireless terminal 104 from the first cell 100 to the second cell 102 is performed.

The first cell 100 is served by a first base station 108 and the second cell 102 is served by a second base station 110. During the handover procedure of the wireless terminal 104 from the first cell 100 to the second cell 102 the first base station 108 exchanges information with the second base station 110. The first base station 108 knows the 15 last cells, to which the wireless terminal 104 has been connected before and the corresponding times how long the wireless terminal 104 stayed in these cells, also referred to as visited time. During the handover procedure the first base station 108 transmits information about the 15 last cells and the first cell 100 including the corresponding visited times to the second base station 110. Additionally the first base station 108 transmits the mobility state parameters of the 15 last cells and the mobility state parameters of the first cell 100 to the second base station 110. Alternatively the first base station 108 may transmit information about the mobility state of the wireless terminal 104 in the last 15 cells and the first cell 100.

Mobility state parameters 112 of second base station 110 and mobility state parameters 114 of first base station 108 comprise an evaluation time and two cell changes thresholds. The evaluation time is the time period, for which the wireless terminal 104 counts the performed handovers, which corresponds to cell changes. The two cell changes thresholds define the borders of the three speed categories respectively the three mobility states. For example wireless terminals with a number of performed handovers below the first cell changes threshold are categorized into the first speed category, wireless terminals with a number of performed handovers between the first and the second cell changes threshold are categorized into the second speed category and the wireless terminals with a number of performed handovers above the second cell changes threshold are categorized in the third speed category. The first speed category corresponds to the lowest mobility state, the second speed category corresponds to a medium mobility state and the third speed category corresponds to a high mobility state.

The second base station 110 has its own mobility state parameters 112, which differ from the mobility state parameters 114 of the first base station 108 and from the rest of the mobility state parameters of the last 15 cells. This is why the second base station 110 would not be able to calculate the mobility state or also the speed category of wireless terminal 104 in the first cell 100 and in the last 15 cells only by knowing the visited times. The second base station 110 is adapted to determine the mobility state or speed category of the wireless terminal 104 in the first cell 100 and in the 15 last cells. An exemplary result of such a determination is given in charts 1 and 2.

**Chart 1**

| **Cell** | **Mobility State / Speed Category** |
|---|---|
| 1 | normal / first |
| 2 | medium / second |
| 3 | high / third |
| 4 | high / third |
| 5 | high / third |
| 6 | normal / first |
| 7 | normal / first |
| 8 | medium / second |
| 9 | medium / second |
| 10 | medium / second |
| 11 | medium / second |
| 12 | medium / second |
| 13 | medium / second |
| 14 | high / third |
| 15 | high / third |
| 16 | high / third |

**Chart 2**

| **Cell** | **Mobility State / Speed Category** |
|---|---|
| 1 | high /third |
| 2 | high / third |
| 3 | high / third |
| 4 | high / third |
| 5 | high / third |
| 6 | high / third |
| 7 | medium / second |
| 8 | medium / second |
| 9 | medium / second |
| 10 | medium / second |
| 11 | medium / second |
| 12 | high / third |
| 13 | high / third |
| 14 | high / Third |
| 15 | high / third |
| 16 | high / third |

It is to be noted that the charts are only exemplary for mobility states respectively speed categories of a wireless terminal. The normal mobility state corresponds to the first speed category, the medium mobility state corresponds to the second speed category and the high mobility state corresponds to the third category. According to the mobility information of charts 1 and 2 the wireless terminals are in both cases categorized in the high mobility state in the last three cells. The wireless terminal of chart 1 is categorized in the high mobility state in the last five cells. Based on a plurality of such mobility information the second base station determines an optimization of handover parameters or to avoid handovers for certain wireless terminals.

For example, if the second base station determines to avoid handovers for wireless terminals being categorized in the last three cells in the high mobility state, both wireless terminals of charts 1 and 2 would not be handed over to the second cell. But if the second base station determines to avoid handovers for wireless terminals being categorized in the last four or five cells in the high mobility state, only the handover for the wireless terminal of chart 2 would be avoided. The wireless terminal of chart 1 would be handed over to the second base station.

Based on the determination of the mobility state of the wireless terminal 104 in the last 15 cells and in cell 100 the second base station 110 optimizes the time to trigger or any other handover parameter for handovers of wireless terminals fulfilling a certain criterion concerning their mobility states. If, for example, handovers of wireless terminals being categorized in the third speed category fail often, the time to trigger should be optimized or handovers for such wireless terminals should be avoided. The second base station 110 decides that handovers for such wireless terminals have often failed when the handover failure rate is above a handover failure threshold. By optimizing a handover parameter such as the time to trigger or by avoiding handovers for wireless terminals fulfilling a certain criterion regarding their recent mobility states or speed categories handover failures and radio link failures after a handover from the first cell 100 to the second cell 102 are avoided.

Fig. 2 is a schematic view of a wireless telecommunication system comprising a plurality of cells 200, a second cell 102, and a third cell 202. The plurality of cells 200 comprises the first cell 100. Two exemplary situations are explained in Fig. 2. The first example is a moving pedestrian 204 with a wireless terminal. The pedestrian 204 is located in first cell 100 and has previously moved through the rest of the plurality of cells 200. The pedestrian 204 moves slowly with respect to other wireless terminals and the wireless terminal of the pedestrian 204 is categorized into the first speed category. The pedestrian 204 walks from first cell 100 towards third cell 202. When entering third cell 202 the wireless terminal of pedestrian 204 performs a handover from first cell 100 to third cell 202. In the direction of movement of pedestrian 204 third cell 202 is relatively small with respect to second cell 102 and the plurality of cells 200. This is why shortly after the handover from first cell 100 to third cell 202 another handover is performed from third cell 202 to second cell 102. But because the pedestrian 204 moves with a relatively low speed and the wireless terminal of pedestrian 204 is categorized into the first speed category both handovers are performed correctly. There is no need for any of the cells to change a handover parameter or to avoid future handovers of such a wireless terminal.

The second example depicted in Fig. 2 is a wireless terminal moving in a car 206. The car may for example move on a highway. The car 206 is located in cell 100 and has previously been moving through the plurality of cells 200. The car 206 moves towards third cell 202 and a handover is performed for the wireless terminal located in car 206 from first cell 100 to third cell 202. Afterwards the car 206 moves on towards second cell 102 and a handover procedure for the wireless terminal in the car 206 is initiated. Because of the relatively high speed of the wireless terminal in the car 206 the handover from the third cell 202 to the second cell 102 is not performed correctly and a handover failure is detected. Afterwards, the second base station 102 informs the third base station about the handover failure. The wireless terminal in car 206 has been categorized throughout the plurality of cells 200 in the third speed category, because the car 206 has been moving on the highway with a relatively high speed. After a certain amount of failed handovers from third cell 202 to second cell 102, which exceeds a threshold, the third cell does not any longer accept handovers from wireless terminals being located in cell 100 being categorized in the last 3, 4, 5, 6 or 16 cells in the third speed category. The number of cells taken into account for this determination may vary. Alternatively the first base station of first cell 100 is informed about the high handover failure rate for such wireless terminals and the first base station of first cell 100 does not perform any handovers from the first cell to the third cell 202. Instead, first base station of first cell 100 always performs directly a handover from first cell 100 to second cell 102. Thus, when future cars travel through the plurality of cells 200 towards second cell 102 no more handover failures occur. This is especially advantageous for highways because on a highway usually the majority of wireless terminals is moved with similar speeds and so with similar mobility information.

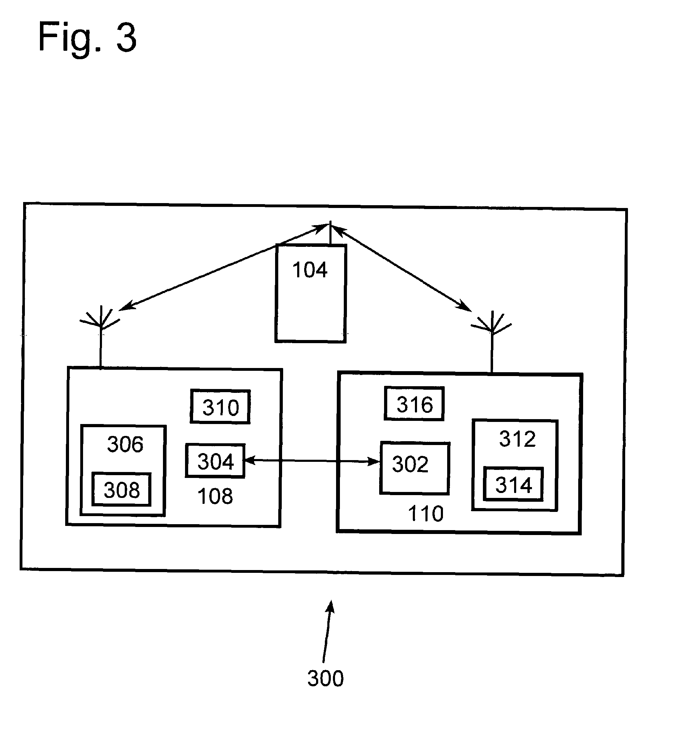

Fig. 3 is a block diagram of a wireless telecommunication system 300, a first base station 108 and a second base station 110. Both base stations 108 and 110 have means for receiving and transmitting signals from and to wireless terminal 104. First base station 108 has an interface 302 for communicating and exchanging signals with second base station 110. Second base station 110 has also an interface 304 for communicating with first base station 108 and exchanging signals with first base station 108. First base station 108 further comprises a storage 306 comprising a computer program 308. The computer program 308 may be performed by processor 310. Correspondingly second base station 110 comprises a data storage 312 with a program 314, which may be performed by processor 316.

In operation, the processor 310 of the first base station 108 performs program 308 and the processor 316 of second base station 110 performs program 314. The respective programs cause the base stations to perform the following method.

The first base station 108 transmits a handover request message via interfaces 304 and 302 to second base station 110. The handover request message comprises mobility information of the wireless terminal, for which the handover shall be performed. The second base station determines the speed category of the wireless terminal based on the mobility state parameters and the connection times in processor 316. Then, during the handover procedure a handover failure may occur and a handover failure message is transmitted via interfaces 302 and 304 from second base station 110 to first base station 108. Afterwards, handover parameters such as the time to trigger are adjusted by the second base station 110 depending on the speed category of the wireless terminal, if the number of handover failure messages exceeds a handover failure threshold.

### List of Reference Numerals

| | |
|---|---|
| 100 | First cell |
| 102 | Second cell |
| 104 | Wireless terminal |
| 106 | Overlapping region |
| 108 | First base station |
| 110 | Second base station |
| 112 | Mobility state parameters |
| 114 | Mobility state parameters |
| 200 | Plurality of cells |
| 202 | Third cell |
| 204 | Pedestrian |
| 206 | Car |
| 300 | Wireless telecommunication system |
| 302 | Interface |
| 304 | Interface |
| 306 | Storage |
| 308 | Program |
| 310 | Processor |
| 312 | Storage |
| 314 | Program |
| 316 | Processor |

## Claims

1. A method for performing a handover procedure of a wireless terminal (104) from a first base station (108) to a second base station (110) in a wireless telecommunication network;
wherein the wireless terminal is moved with a speed, the speed being categorized in a first, a second, or a third speed category depending on mobility state parameters of a plurality of base stations, the plurality of base stations comprising the first base station;
wherein the mobility state parameters comprise a first cell changes threshold and a second cell changes threshold and an evaluation time, the evaluation time being a time period, for which the wireless terminal determines a number of handovers performed by the wireless terminal;
wherein the speed of the wireless terminal is categorized in the first category, if the number of performed handovers is below the first cell changes threshold;
wherein the speed of the wireless terminal is categorized in the second category, if the number of performed handovers is above the first cell changes threshold and below the second cell changes threshold;
wherein the speed of the wireless terminal is categorized in the third category, if the number of performed handovers is above the second cell changes threshold;
wherein the method comprises transmitting a handover request message from the first base station to the second base station, the handover request message comprising mobility information of the wireless terminal;

2. Method according to claim 1, wherein the mobility information of the wireless terminal comprises the mobility state parameters of each base station of the plurality of base stations and connection times, the connection times being the times the wireless terminal was connected to each base station of the plurality of base stations;
wherein the second base station determines the speed category of the wireless terminal based on the mobility state parameters of the plurality of base stations and the connection times.

3. Method according to claim 1, wherein the mobility information of the wireless terminal comprises the speed category of the wireless terminal in each base station of the plurality of base stations.

4. Method according to any one of the preceding claims, wherein the method further comprises:
- transmitting a handover failure message from the second base station to the first base station, if the handover procedure fails,
- adjusting handover parameters for handovers of wireless terminals with a speed being categorized in one of the three speed categories from the first base station to the second base station, if the number of hand over failure messages for wireless terminals with a speed being categorized in the one speed category exceeds a handover failure threshold.

5. Method according to any one of the preceding claims, wherein the handover parameters comprise a first time to trigger, the first time to trigger being the time the signal power of the second base station received by the wireless terminal is higher than the signal power of the first base station received by the wireless terminal.

6. Method according to claim 5, wherein the handover parameters comprise a first scale factor and a second scale factor,
wherein the time to trigger of a wireless terminal with a speed being categorized in the first speed category is the first time to trigger;
wherein the time to trigger of a wireless terminal with a speed being categorized in the second speed category is a second time to trigger, the second time to trigger being calculated by multiplying the first time to trigger with the first scale factor; and
wherein the time to trigger of a wireless terminal with a speed being categorized in the third speed category is a third time to trigger, the third time to trigger being calculated by multiplying the first time to trigger with the second scale factor.

7. Method according to any one of the preceding claims, wherein the method comprises:
- analyzing the mobility information of the wireless terminal in the first base station;
- determining if the probability for a handover failure during a handover of the wireless terminal from the first base station to a third base station is above a probability threshold based on the analysis of the mobility information and past handover procedures of other wireless terminals from the first base station to the third base station;
- if so, performing a handover from the first base station to the second base station.

8. Method according to any one of the claims 1-6, wherein the method comprises:
- transmitting a handover request from the first base station to a third base station;
- analyzing the mobility information of the wireless terminal in the third base station;
- transmitting a handover rejection from the third base station to the first base station based on the analysis of the mobility information and past handover procedures of other wireless terminals from the first base station to the third base station;
- performing a handover from the first base station to the second base station.

9. Method according to any one of the preceding claims, wherein the handover parameters are adjusted based also on the categorization of past speeds of the wireless terminal.

10. Method according to any one of the preceding claims, wherein the second base station determines the speed category of the wireless terminal by determining the number of performed handovers during the evaluation time.

11. A base station apparatus (110) comprising
- means (302) for receiving a handover request message from another base station (108) for a handover procedure of a wireless terminal (104), the handover request message comprising mobility information of the wireless terminal;
- means (316) for determining a speed category of the wireless terminal based on the mobility state parameters and the connection times;
- means (302) for transmitting a handover failure message to the other base station;
- means (316) for adjusting handover parameters for the handover procedure of the wireless terminal depending on the speed category of the wireless terminal, if the number of handover failure messages exceeds a handover failure threshold.

12. A base station apparatus (108) comprising:
- means (304) for transmitting a handover request message to another base station (110) for a handover procedure of a wireless terminal (104), the handover request message comprising mobility information of the wireless terminal;
- means (304) for receiving a handover failure message from the other base station.

13. A wireless telecommunication system (300) comprising at least a base station apparatus according to claim 11 and a base station apparatus according to claim 12.

14. A computer-readable storage medium (312) containing instructions (314) that when executed by a base station apparatus according to claim 11 cause the base station apparatus to perform a method of communicating in a wireless telecommunication network, the method comprising:
- receiving a handover request message from another base station for a handover procedure of a wireless terminal, the handover request message comprising mobility information of the wireless terminal;
- determining a speed category of the wireless terminal based on the mobility state parameters and the connection times;
- receiving a handover failure message from the other base station;

15. A computer-readable storage medium (306) containing instructions (308) that when executed by a base station apparatus according to claim 12 cause the base station apparatus to perform a method of communicating in a wireless telecommunication network, the method comprising:
- transmitting a handover request message to another base station for a handover procedure of a wireless terminal, the handover request message comprising mobility information of the wireless terminal;
- transmitting a handover failure message to the other base station.

## Amended claims

### Amended claims in accordance with Rule 137(2) EPC.

**1.** A method for performing a handover procedure of a wireless terminal (104) from a first base station (108) to a second base station (110) in a wireless telecommunication network;
wherein the wireless terminal is moved with a speed, the speed being categorized in a first, a second, or a third speed category depending on mobility state parameters of a plurality of base stations, the plurality of base stations comprising the first base station;
wherein the mobility state parameters comprise a first cell changes threshold and a second cell changes threshold and an evaluation time, the evaluation time being a time period, for which the wireless terminal determines a number of handovers performed by the wireless terminal;
wherein the speed of the wireless terminal is categorized in the first category, if the number of performed handovers is below the first cell changes threshold;
wherein the speed of the wireless terminal is categorized in the second category, if the number of performed handovers is above the first cell changes threshold and below the second cell changes threshold;
wherein the speed of the wireless terminal is categorized in the third category, if the number of performed handovers is above the second cell changes threshold;
wherein the method comprises transmitting a handover request message from the first base station to the second base station, the handover request message comprising mobility information of the wireless terminal;
wherein the mobility information of the wireless terminal comprises the mobility state parameters of each base station of the plurality of base stations and connection times, the connection times being the times the wireless terminal was connected to each base station of the plurality of base stations;
wherein to each base station of the plurality of base stations corresponds one connection time and one set of mobility state parameters;
wherein the second base station determines the speed category of the wireless terminal based on the mobility state parameters of the plurality of base stations and the connection times.

**2.** Method according to claim 1, wherein the mobility information of the wireless terminal comprises the speed category of the wireless terminal in each base station of the plurality of base stations.

**3.** Method according to any one of the preceding claims, wherein the method further comprises:
- transmitting a handover failure message from the second base station to the first base station, if the handover procedure fails,
- adjusting handover parameters for handovers of wireless terminals with a speed being categorized in one of the three speed categories from the first base station to the second base station, if a number of handover failure messages for wireless terminals with a speed being categorized in the one speed category exceeds a handover failure threshold.

**4.** Method according to claim 3, wherein the handover parameters comprise a first time to trigger, the first time to trigger being the time the signal power of the second base station received by the wireless terminal is higher than the signal power of the first base station received by the wireless terminal.

**5.** Method according to claim 5, wherein the handover parameters comprise a first scale factor and a second scale factor,
wherein the time to trigger of a wireless terminal with a speed being categorized in the first speed category is the first time to trigger;
wherein the time to trigger of a wireless terminal with a speed being categorized in the second speed category is a second time to trigger, the second time to trigger being calculated by multiplying the first time to trigger with the first scale factor; and
wherein the time to trigger of a wireless terminal with a speed being categorized in the third speed category is a third time to trigger, the third time to trigger being calculated by multiplying the first time to trigger with the second scale factor.

**6.** Method according to any one of the preceding claims, wherein the method comprises:
- analyzing the mobility information of the wireless terminal in the first base station;
- determining if the probability for a handover failure during a handover of the wireless terminal from the first base station to a third base station is above a probability threshold based on the analysis of the mobility information and past handover procedures of other wireless terminals from the first base station to the third base station;
- if so, performing a handover from the first base station to the second base station.

**7.** Method according to any one of the claims 1-6, wherein the method comprises:
- transmitting a handover request from the first base station to a third base station;
- analyzing the mobility information of the wireless terminal in the third base station;
- transmitting a handover rejection from the third base station to the first base station based on the analysis of the mobility information and past handover procedures of other wireless terminals from the first base station to the third base station;
- performing a handover from the first base stations to the second base station.

**8.** Method according to any one of the claims 3-7, wherein the handover parameters are adjusted based also on the categorization of past speeds of the wireless terminal.

**9.** Method according to any one of the preceding claims, wherein the second base station determines the speed category of the wireless terminal by determining the number of performed handovers during the evaluation time.

**10.** A base station apparatus (110) comprising
- means (302) for receiving a handover request message from another base station (108) for a handover procedure of a wireless terminal (104), the handover request message comprising mobility information of the wireless terminal;
- means (316) for determining a speed category of the wireless terminal based on mobility state parameters and connection times, wherein the mobility state parameters comprise a first cell changes threshold and a second cell changes threshold and an evaluation time for each base station of a plurality of base stations, to which the wireless terminal had been connected before, the evaluation time being a time period, for which the wireless terminal determines a number of handovers performed by the wireless terminal;
- means (302) for transmitting a handover failure message to the other base station;
- means (316) for adjusting handover parameters for the handover procedure of the wireless terminal depending on the speed category of the wireless terminal, if a number of handover failure messages exceeds a handover failure threshold.

**11.** A base station apparatus (108) comprising:
- means (304) for transmitting a handover request message to another base station (110) for a handover procedure of a wireless terminal (104), the handover request message comprising mobility information of the wireless terminal;
- means (304) for receiving a handover failure message from the other base station.

**12.** A wireless telecommunication system (300) comprising at least a base station apparatus according to claim 10 and a base station apparatus according to claim 11.

**13.** A computer-readable storage medium (312) containing instructions (314) that when executed by a base station apparatus according to claim 10 cause the base station apparatus to perform of the following steps for communicating in a wireless telecommunication network:
- receiving a handover request message from another base station apparatus for a handover procedure of a wireless terminal, the handover request message comprising mobility information of the wireless terminal;
- determining a speed category of the wireless terminal based on the mobility state parameters and the connection times;
- transmitting a handover failure message to the other base station apparatus;
- adjusting handover parameters for the handover procedure of the wireless terminal depending on the speed category of the wireless terminal, if a number of handover failure messages exceeds a handover failure threshold;

**14.** A computer-readable storage medium (306) containing instructions (308) that when executed by a base station apparatus according to claim 11 cause the base station apparatus to perform of the following steps for communicating in a wireless telecommunication network:
- transmitting a handover request message to another base station apparatus for a handover procedure of a wireless terminal, the handover request message comprising mobility information of the wireless terminal;
- receiving a handover failure message from the other base station apparatus.
